# EUROPEAN PATENT SPECIFICATION

(11) **EP 1 063 114 B1**
(45) Date of publication and mention of the grant of the patent: **13.10.2004**
(21) Application number: 00202123.6
(22) Date of filing: 19.06.2000
(51) Int. Cl.: B60J 7/22

(54) **Wind deflector and open roof construction for a vehicule fitted with such a wind deflector**
Windabweiser und öffnungsfähige Dachkonstruktion für ein Fahrzeug ausgerüstet mit einem solchen Windabweiser
Déflecteur de vent et construction de toit ouvrant pour un véhicule équipé avec un tel déflecteur de vent

(30) Priority: 21.06.1999 NL 1012396
(43) Date of publication of application: 27.12.2000
(73) Proprietor: Inalfa Roof Systems Group B.V., 5804 AH Venray (NL)
(72) Inventor: Manders, Peter Christiaan Leornardus Johannes, 5961 SM Horst (NL); De Haas, Johan, 5751 EL Deurne (NL)
(74) Representative: Metman, Karel Johannes

(56) References cited:
- DE-C- 4 411 386

## Description

The invention relates to a wind deflector according to the preamble of claim 1.

A wind deflector of this type is known from DE 44 11 386 Cl. The connecting member is inserted into a cavity of the wind deflector in a direction parallel to the plane of the wind deflector and is held in position by snap means acting between the connecting member and the wind deflector.

. The object of the present invention is to provide a new wind deflector of the kind referred to in the introduction.

In order to accomplish that objective, the wind deflector according to the invention includes the features of the characterising portion of claim 1.

The snap means, which may be integrated in the connecting member and/or in the wind deflector, enable a very simple manner of attaching the connecting member to the wind deflector.

The invention will be explained in more detail hereafter with reference to the drawings, which show an embodiment of the invention.
Figs. 1 and 2 are longitudinal sectional views of a part of the embodiment of the open roof construction according to the invention, in two different positions thereof.
Fig. 3 is a larger-scale, perspective bottom view of a part of the wind deflector of the open roof construction of Figs. 1 and 2, showing the connecting member in partially mounted condition.
Fig. 4 is a view corresponding to Fig. 3, showing the connecting member in entirely mounted condition.
Fig. 5 is a perspective view from above of the part of the wind deflector of Fig. 3, showing the connecting member in partially mounted condition.

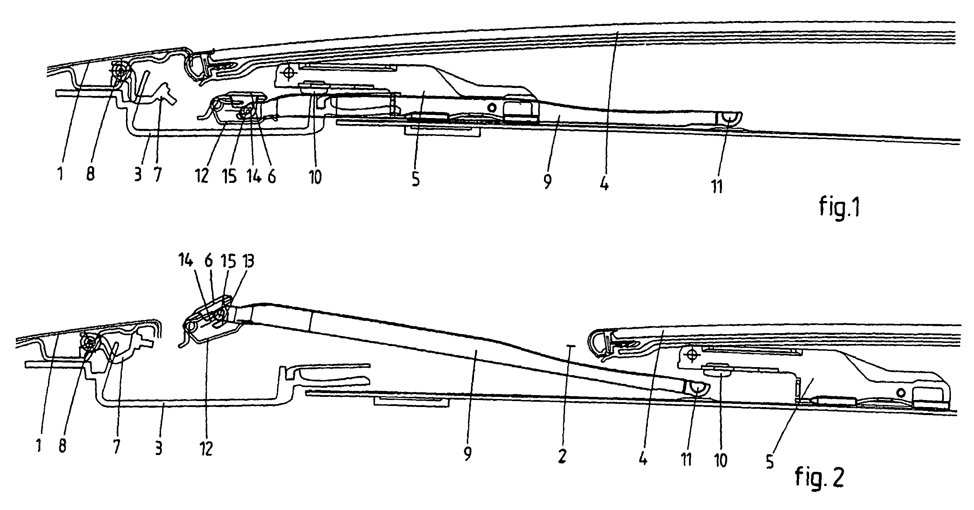

Figs. 1 and 2 show an embodiment of the open roof construction according to the invention, which is built into a fixed roof 1 of a motor vehicle, such as a passenger car, which is provided with an opening 2 for accommodating the open roof construction. Said open roof construction comprises a frame 3 or the like stationary part to be fixed to the vehicle for movably supporting a closure element 4.

In the illustrated embodiment the open roof construction is a so-called sliding/tilt roof, which is provided (in this case) with a more or less rigid and preferably transparent panel 4 as the closure element, which is capable of selectively closing roof opening 2 or releasing it to a smaller or larger extent by pivoting upwards or sliding to the rear. To this end, panel 4 is laterally supported by operating mechanisms, of which only a front slide 5 on one side of the panel is shown in the drawing, which slide is movably accommodated in an associated guide rail, which may be mounted on frame 3, for example, or which forms part thereof, and which extends in the longitudinal direction on one side of the roof opening 2.

In order to prevent the wind from entering the vehicle when driving with panel 4 in its rearwardly moved position, a wind deflector 6 is mounted on the front side of the roof opening 2, directly behind the front edge thereof. Said wind deflector can be moved between a downwardly pivoted, inoperative position under panel 4 (Fig. 1) and an upwardly pivoted, operative position in which the wind deflector 6 projects above fixed roof 1 (Fig. 2).

Wind deflector 6 is hinged on pivoting arms 7, which can pivot about pivots 8 under the front part of fixed roof 1. Operating arms 9 for operating wind deflector 6 are mounted on both ends thereof, which operating arms have a substantial length and which extend rearwards in the path of a ramp 10 on front slide 5, so that the arms can be pushed down by ramp 10 when panel 4 is being closed in forward direction. Each operating arm 9 pivots about a pivot 11 and is loaded in upward direction by an associated torsion spring 12, which is mounted between wind deflector 6 and the respective operating arm 9, and which loads the wind deflector 6 relative to the two operating arms 9 towards the position as shown in Fig. 2.

Since the pivoting arms 7 and the operating arms 9 pivot about fixed pivots, and wind deflector 6 is rigidly attached to pivoting arms 7, the point of engagement between operating arms 9 and wind deflector 6 must be movable. To this end, wind deflector 6 includes a connecting member 13 for each operating arm 9 on the underside, which connecting member is provided with a curved slot 14, in which a pin 15 can engage at the front end of operating arm 9. Preferably, double slots 14 and pins 15 are used for each connecting member 13, and to this end the front end of each operating arm 9 is forked, with two pins 15 extending towards each other, which pins engage in associated slots 14 on either side of connecting member 13. Movement of pins 15 in slots 14 allows pivoting arms 7 and operating arms 9 to pivot relative to each other, in spite of the fact that pivots 8 and 11 remain at a fixed location.

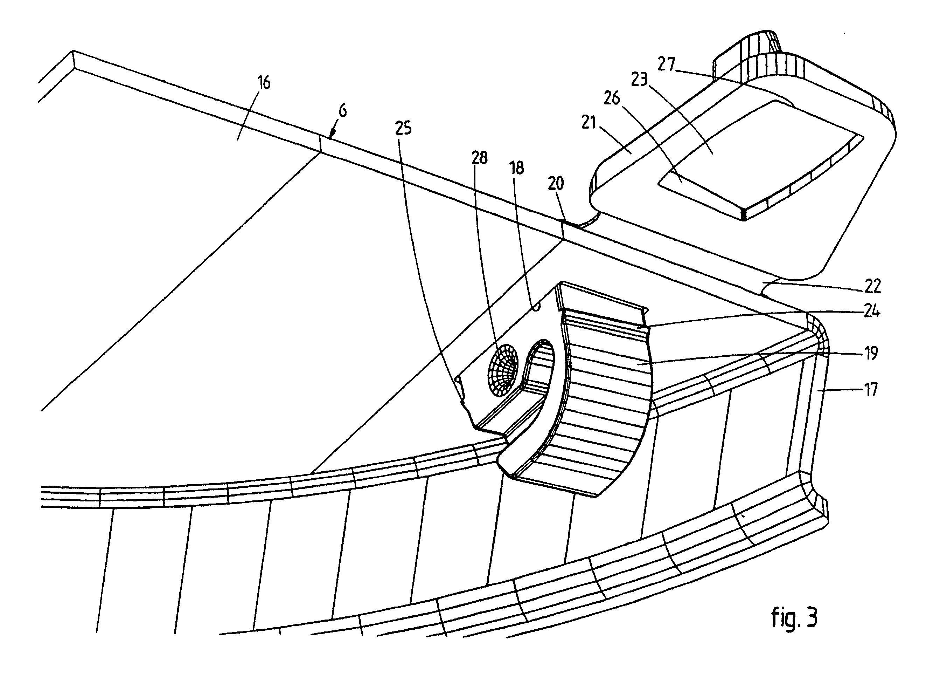

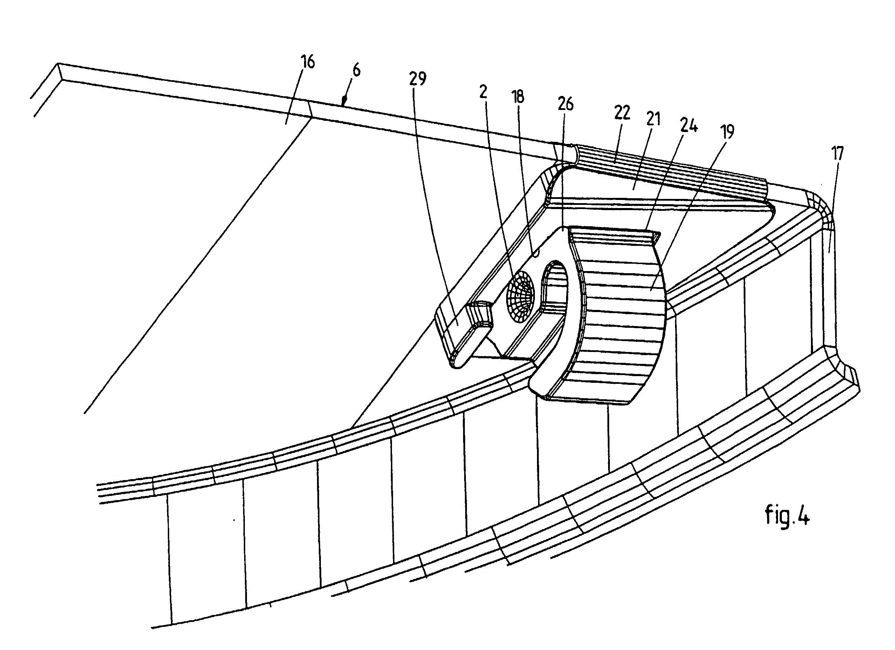

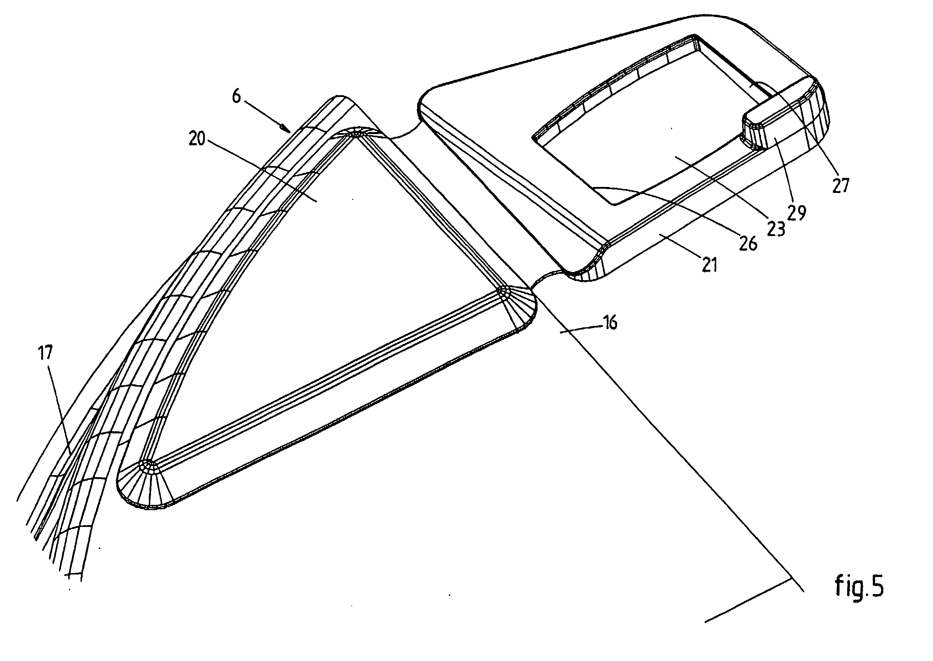

Figs. 3 - 5 show the construction and the attachment of connecting member 13 to wind deflector 6 in more detail.

As is shown in Figs. 3 - 6, wind deflector includes a plate-shaped part 16 including a downwardly extending front wall 17 at its front edge, which wall follows the shape of the edge of fixed roof 1. A through opening 18 is formed in plate-shaped part 16 at both ends of wind deflector 6, which opening is rectangular and which is sufficiently large to allow a projecting part 19 of connecting member 13 to pass therethrough. At its upper end connecting member 13 includes a stop plate 20, which lies flat on the upper side of plate-shaped part 16 of wind deflector 6 in the mounted position of connecting member 13, and which hardly disturbs the streamline of the wind deflector, if at all. A cover 21 is formed on stop plate 20, at the rear edge thereof, which cover is connected thereto via a film hinge 22, which film hinge is so formed that it will abut flat against the rear edge of plate-shaped part 16 of wind deflector 6 when cover 21 is folded about the plate-shaped part 16 and comes into contact with the underside of the plate-shaped part of wind deflector 6. The cover 21 of connecting member 13 fits, via an opening 23, round the projecting part 19 of connecting member 13, which includes snap edges 24, 25 at its front and rear sides, which snap edges mate with the associated edges 26, 27 of opening 23 in cover 20, in such a manner that cover 20 snaps firmly about connecting member 13, thus securing the connecting member 13 to the plate-shaped part 16 of wind deflector 6.

A hole 28 is formed in the projecting part 19 of connecting member 13, in which hole a leg of torsion spring 12 fits. In this manner the connecting member 13 is used not only for mounting the torsion spring 12, but the leg of said torsion spring also functions as an additional locking member for connecting member 13, which prevents cover 21 from becoming detached from snap edges 24, 25 of the connecting member 13. A cam 29 locks torsion spring 12 laterally in hole 28.

From the foregoing it will be apparent that the invention provides a connecting member for a wind deflector which is remarkable for its simple mounting and the absence of additional mounting elements.

The invention is not limited to the above-described embodiment as shown in the drawing, which can be varied in several ways without departing from the scope of the invention. Thus the wind deflector can also be used for other types of open roof constructions, such as spoiler roofs, folding roofs,slatted roofs and the like. The invention can also be used with other types of connecting members. Furthermore the connecting member and the wind deflector could each comprise a part of mating snap means, or the wind deflector could be snapped round the connecting member.

## Claims

1. A wind deflector for use in an open roof construction of a vehicle having a roof opening (2) in its fixed roof (1), said wind deflector (6) including a plate-shaped part (16) and being adapted to be placed adjacent to the front side of the roof opening said wind deflector (6) including a connecting member (13) for a movable connection with the open roof construction so as to be adjustable between a downwardly pivoted, inoperative position and an upwardly pivoted, operative position, said connecting member (13) and/or said wind deflector (6) including snap means (21 - 27) via which the connecting member is attached to the wind deflector, said wind deflector has a through opening (18) therein, **characterized in that** said connecting member (13) includes a cover (21) and a projecting part (19) projecting through the through opening (18), said cover and said projecting part (19) of the connecting member (13) including mating snap means (21 - 27).

2. A wind deflector according to claim 1, wherein the projecting part (19) of the connecting member (13) is disposed on a stop plate (20), wherein the stop plate (20) functions as a stop member for the projecting part (19).

3. A wind deflector according to claim 1 or 2, wherein said cover (21) is formed on the stop plate (20) of the connecting member (13) by means of a hinge (22) and has an opening (23) therein, which fits over the part (19) of the connecting member (13) that projects through the opening (18) in the wind deflector and which is snapped round said part.

4. A wind deflector according to claim 3, wherein the projecting part (19) of the connecting member (13) is provided with a hole (28) into which a locking element is inserted.

5. A wind deflector according to claim 4, wherein said locking element is made up of a spring (12), in particular a two-legged torsion spring, one leg of which is inserted into the hole (28) of the connecting member.

6. A wind deflector according to claim 5, wherein the cover (21) is provided with a cam (29) locking the spring (12) laterally in its hole (28).

7. A wind deflector according to one of the preceding claims, wherein the connecting member (13) is connected to both ends of the wind deflector (6) and provides a connection with operating arms (9) which can be pivot-mounted to the open roof construction.

8. A wind deflector according to claim 7, wherein the wind deflector is capable of pivoting movement with respect to the operating arms (9) and each connecting member (13) is connected to the associated operating arm (9) via a pin-slot connection (14, 15) and biased to the operative position by means of said spring (12).

## Patentansprüche

1. Wind-Abweiser zum Verwenden in einer Offendachkonstruktion eines Fahrzeugs mit einer Dachöffnung (2) in dessen Festdach (1), wobei der Wind-Abweiser (6) einen plattenförmigen Teil (16) aufweist und dazu eingerichtet ist, um benachbart zu der Vorderseite der Dachöffnung angeordnet zu sein, wobei der Wind-Abweiser (6) ein Verbindungs-Element (13) aufweist für eine bewegbare Verbindung mit der Offendachkonstruktion, um zwischen einer nach unten geschwenkten Ruhestellung und einer nach oben geschwenkten Betätigungsstellung verstellbar zu sein, wobei das Verbindungselement (13) und/oder der Wind-Abweiser (6) Einrast-Mittel (21 - 27) aufweisen mittels welchen das Verbindungselement am Wind-Abweiser (6) befestigt ist, wobei der Wind-Abweiser eine Durchgangsöffnung (18) darin aufweist, **dadurch gekennzeichnet, dass** das Verbindungselement (13) eine Abdeckung (21) und einen vorstehenden Teil (19) aufweist, der durch die Durchgangsöffnung (18) hindurch vorsteht, wobei die Abdeckung und der vorstehende Teil (19) des Verbindungselements (13) zusammenpassende Einrast-Mittel (21 - 27) aufweisen.

2. Wind-Abweiser gemäß Anspruch 1, wobei der vorstehende Teil (19) des Verbindungselements (13) an einer Stopp-Platte (20) angeordnet ist, wobei die Stopp-Platte (20) als ein Stopp-Element für den vorstehenden Teil (19) funktioniert.

3. Wind-Abweiser gemäß Anspruch 1 oder 2, wobei die Abdeckung (21) mittels eines Gelenks (22) an der Stopp-Platte (20) des Verbindungselements (13) angeformt ist und darin eine Öffnung (23) aufweist, welche über den durch die Öffnung (18) in dem Wind-Abweiser vorstehenden Teil (19) des Verbindungselements passt und welche um den Teil herum gerastet ist.

4. Wind-Abweiser gemäß Anspruch 3, wobei der vorstehende Teil (19) des Verbindungselements (13) mit einem Loch (28) bereitgestellt ist, in welches ein Arretierelement eingesetzt ist.

5. Wind-Abweiser gemäß Anspruch 4, wobei das Arretierelement aus einer Feder (12) ist, insbesondere einer zweischenkeligen Drehfeder, wobei ein Schenkel von dieser in das Loch (28) des Verbindungselements eingesetzt ist.

6. Wind-Abweiser gemäß Anspruch 5, wobei die Abdeckung (21) mit einem Ansatz (29) versehen ist, der die Feder (12) in ihrem Loch seitlich (28) arretiert.

7. Wind-Abweiser gemäß einem der vorhergehenden Ansprüche, wobei das Verbindungselement (13) mit beiden Enden mit dem Wind-Abweiser (6) verbunden ist und eine Verbindung mit Betätigungsarmen (9) bereitstellt, welche an der Offendachkonstruktion schwenk-montierbar sind.

8. Wind-Abweiser gemäß Anspruch 7, wobei der Wind-Abweiser zu einer Schwenkbewegung bezüglich der Betätigungsarme (9) imstande ist und jedes Verbindungselement (13) mit dem assoziierten Betätigungsarm (9) mittels einer Stift-Schlitz-Verbindung (14, 15) verbunden ist und mittels der Feder (12) zu der Betätigungsstellung hin vorgespannt ist.

## Revendications

1. Un déflecteur de vent à utiliser dans une structure de toit ouvrant d'un véhicule ayant une ouverture (2) de toit dans son toit fixe (1), ledit déflecteur de vent (6) comprenant une partie (16) en forme de plaque et étant adapté pour être placé dans une position voisine du côté avant de l'ouverture (2) de toit, ledit déflecteur de vent (6) comprenant un élément de raccordement (13) assurant un raccordement mobile avec la structure de toit ouvrant de façon à pouvoir être réglé entre une position inactive, pivotée vers le bas, et une position active, pivotée vers le haut, ledit élément de raccordement (13) et/ou ledit déflecteur de vent (6) comprenant des moyens à pression (21 - 27) par l'intermédiaire desquels l'élément de raccordement est fixé au déflecteur de vent, une ouverture débouchante (18) étant présente dans ledit déflecteur, **caractérisé en ce que** ledit élément de raccordement (13) inclut un couvercle (21) et une partie en saillie (19) avançant à travers l'ouverture débouchante (18), ledit couvercle et ladite partie en saillie (19) de l'élément de raccordement (13) comprenant des moyens d'accouplement par pression (21 - 27).

2. Un déflecteur de vent selon la revendication 1, dans lequel la partie en saillie (19) de l'élément de raccordement (13) est disposée sur une plaque d'arrêt (20), dans lequel la plaque d'arrêt (20) agit comme un élément d'arrêt pour la partie en saillie (19).

3. Un déflecteur de vent selon la revendication 1 ou 2, dans lequel ledit couvercle (21) est formé sur la plaque d'arrêt (20) de l'élément de raccordement (13) au moyen d'une charnière (22) et possède une ouverture (23), qui s'adapte sur la partie (19) de l'élément de raccordement (13) qui avance à travers l'ouverture (18) dans le déflecteur de vent et qui est encliqueté autour de ladite partie.

4. Un déflecteur de vent selon la revendication 3, dans lequel la partie en saillie (19) de l'élément de raccordement (13) est pourvue d'un trou (28) dans lequel un élément de verrouillage est inséré.

5. Un déflecteur de vent selon la revendication 4, dans lequel ledit élément de verrouillage est constitué d'un ressort (12), en particulier d'un ressort de torsion à deux branches, dont une branche est insérée dans le trou (28) de l'élément de raccordement.

6. Un déflecteur de vent selon la revendication 5, dans lequel le couvercle (21) est muni d'une came (29) bloquant le ressort (12) latéralement dans son trou (28).

7. Un déflecteur de vent selon l'une des revendications précédentes, dans lequel l'élément de raccordement (13) est raccordé aux deux extrémités du déflecteur de vent (6) et fournit un raccordement avec des bras de manoeuvre (9) qui peuvent être montés pivotant sur la structure de toit ouvrant.

8. Un déflecteur de vent selon la revendication 7, dans lequel le déflecteur peut effectuer un mouvement pivotant par rapport aux bras de manoeuvre (9) et dans lequel chaque élément de raccordement (13) est relié au bras de manoeuvre associé (9) par l'intermédiaire d'un raccord formé d'un axe et d'une fente (14, 15) et poussé dans la position active au moyen dudit ressort (12).
